Europäisches Patentamt

European Patent Office

Office européen des brevets

(11) Publication number: **0 410 538 A1**

## EUROPEAN PATENT APPLICATION

(21) Application number: **90202026.2**

(22) Date of filing: **25.07.90**

(51) Int. Cl.5: **C08L 25/02**, C08K 13/02, C08K 3/32, C08K 3/26

(30) Priority: **26.07.89 NL 8901933**

(43) Date of publication of application: **30.01.91 Bulletin 91/05**

(84) Designated Contracting States: **BE DE FR GB IT NL SE**

(71) Applicant: **THE DOW CHEMICAL COMPANY** 2030 Dow Center Abbott Road Midland, MI 48640(US)

(72) Inventor: **van Dijk, Henricus J. M.** Valeriaanstraat 33 NL-4537 DD Terneuzen(NL)

(74) Representative: **Smulders, Theodorus A.H.J., Ir. et al** Vereenigde Octrooibureaux Nieuwe Parklaan 107 NL-2587 BP 's-Gravenhage(NL)

(54) Stabilized and ignition resistant monovinylidene aromatic polymers.

(57) A buffering compound such as tetrasodium pyrophosphate is incorporated into monovinylidene aromatic polymer resins which also contain an aliphatic halogen-containing ignition resistance agent and a transition metal compound. Without the buffering compound, these compositions discolor unacceptably when processed or molded at elevated temperatures.

EP 0 410 538 A1

## STABILIZED AND IGNITION RESISTANT MONOVINYLIDENE AROMATIC POLYMERS

The present invention relates to ignition-resistant monovinylidene aromatic polymer compositions. In particular, this invention is directed to improving the thermal stability and appearance of these resins during and after compounding or molding operations.

It is well known in the art to improve the ignition resistance properties of monovinylidene aromatic polymer compositions by incorporating halogen-containing ignition-resisting agents. The amount and type of such ignition-resisting ("IR") agents can be selected to provide the desired ignition resistance and cost for a particular molding resin. However, certain of these IR agents, especially aliphatic halogenated compounds, are somewhat thermally unstable and can decompose when the resin is processed under high temperature conditions, such as those normally used in compounding or molding operations. Hexabromocyclododecane ("HBCD"), polyvinylidene chloride, polyvinyl chloride ("PVC") and chlorinated polyethylene are examples of such IR agents. This results in decreased ignition resistance of the resin while the acidic decomposition products of the IR agents also tend to degrade the polymer resin properties and appearances.

Thermal stability of the IR agents is known to be improved by maintaining low levels of or removing certain metal ions such as iron, cadmium, aluminum and zinc, which have been found to catalyze the halogenated IR agent decomposition reaction. See for example Larson and Ecker, "Thermal Stability of Fire Retardants: III, Decomposition of Pentabromochlorocyclohexane and Hexabromocyclododecane under Processing Conditions", Journal of Fire Sciences, Vol. 6, March/April 1988, pp. 139-159.

Other attempted solutions to this problem include the incorporation of various thermal stabilizers. In particular, the use of thermal stabilizers for HBCD is well known. See for example JP 61-106,641 (1986), JP 60-139,736 (1985), JP 56-145,939 (1981) and JP 47-022,090 (1972) where various types of stabilizers are used in polymer resins containing HBCD. The use of these known thermal stabilizers can be sufficient in compositions which have normal, low transition metal concentrations, i.e., below about 0.001 parts by weight transition metal per 100 parts by weight polymer composition (10 ppm).

However, there are situations when there are higher levels of transition metal compounds present in the polymer resin. Oftentimes the pigment compounds or other additives added to polymer compositions are based on iron, zinc, cadmium, aluminum and other transition metals. In such cases it has been found to be impossible to achieve sufficient combinations of ignition resistance, IR agent stability and molded article appearance with aliphatic halogen-containing IR agents.

It is therefore an object of the present invention to provide improved monovinylidene aromatic polymer molding resins compositions comprising an aliphatic, halogen-containing IR agent and a significant concentration of transition metal compound, such as a transition metal concentration greater than or equal to 0.001 parts by weight of transition metal per 100 parts by weight of polymer composition (also referred to as 10 ppm or 10 parts by weight transition metal per million parts by weight polymer composition).

This and other objects are obtained according to the present invention which is a monovinylidene aromatic polymer molding resin composition comprising at laast one monovinylidene aromatic polymer, an aliphatic halogen-containing ignition resisting agent and a transition metal compound additive, characterized in that it is stabilized by the incorporation of an effective amount of a buffering compound. The compositions of the present invention have improved combinations of ignition-resistance and appearance when molded into shaped articles.

Surprisingly, the buffering compound permits the simultaneous incorporation of transition metal compounds and aliphatic halogen-containing IR agents in a monovinylidene aromatic polymer and avoiding the unacceptable IR agent degradation which would otherwise result and degrade the physical properties and appearance of articles molded from the polymer resins. As used herein the term "buffering compound" refers to a compound which, under conditions present in molten monovinylidene aromatic polymer containing an aliphatic halogen-containing ignition resisting agent and a transition metal compound, has basic properties and reacts sufficiently quickly with evolved and evolving hydrogen halides to form a stable compound and prevent the decomposition of the polymer properties.

According to the present invention, an effective amount of a buffering compound is used which amount is sufficient to at least substantially neutralize the evolved acidic decomposition products from the halogen-containing IR agent. Depending upon the IR agent, these composition products are typically hydrogen halides which are produced at higher than normal rates due to the catalytic effect of the transition metal compound. Thus, suitable buffering compounds should be incorporated in sufficient amounts and provide their buffering effect at the normal processing temperatures for the resulting monovinylidene aromatic polymer resin and at the rates at which the decomposition products are generated. Such buffering compounds include tetrasodium pyrophosphate (TSPP), sodium carbonate, potassium carbonate, tetrasodium EDTA, sodium oxalate, potassium oxalate, epoxidized soybean oil, sodium phosphate, and potassium phosphate. Mixtures of buffering compounds can be employed.

The amount of such buffering compounds to be used depends upon the amount and type of the transition metal catalyzing the degradation of the halogen-containing IR agent. An effective amount of a buffering compound is an amount which prevents the unacceptable discoloration of the molded article which would otherwise occur when a significant amount of the particular transition metal is present. It has been found that per 1 weight part of transition metal there usually should be at least 0.5 weight part of buffering compound. Preferably, per 1 weight part transition metal there should be at least 1 weight part buffering compound, more preferably, at least 2 weight parts buffering compound.

In some cases, such as when using TSPP or sodium carbonate to stabilize compositions containing zinc stearate, somewhat higher levels may be required to achieve sufficient stabilization of the resin, such as at least 10 weight parts buffering compound per weight part transition metal. Standard experimentation can be used to determine the appropriate levels for the certain transition metals that are present and the buffering compounds that are selected.

It has been found for the combinations of TSPP or sodium carbonate buffering compounds and zinc- and iron-based transition metal compounds evaluated, for example, that the necessary amount of the buffering compound can often be approximately determined based on the amount of the transition metal compound that has been added or is known or found to be present in the polymer composition to be stabilized. It was determined that per 1 weight part of transition metal compound there usually should be at least 1 weight part of buffering compound added. Preferably, per 1 weight part transition metal compound there should be at least 1.5 weight parts buffering compound, more preferably, at least 2 weight parts buffering compound, and most preferably, at least 3 weight parts buffering compound.

The maximum amount of buffering compound depends on the detrimental effect, if any, it has on the resulting polymer properties and the increased cost of the resulting resin.

Depending, of course, on the transition metal concentration of the polymer composition, this means that the polymer composition usually should contain 0.1 to 5 weight parts buffering composition per hundred weight parts polymer composition, preferably 1.5 to 3 weight parts buffering compound per hundred weight parts polymer composition, and more preferably 0.2 to 2 weight parts buffering compound per hundred weight parts polymer composition.

The monovinylidene aromaric polymer resins wherein the present invention is applicable include the homo- and copolymers of the well known monovinylidene aromatic monomers. Such monovinylidene aromatic monomers include styrene and the related monomers wherein the aromatic ring or the alpha carbon can be substituted with a halogen or an alkyl radical of 1 to 4 carbons. This includes alpha-methyl styrene, tertiary butyl styrene and the isomers or mixtures of isomers of vinyl toluene. The monovinylidene aromatic monomer(s) can be homopolymerized or copolymerized with one or more of the well known copolymerizable monomers such as unsaturated nitriles and unsaturated carboxylic acids including the derivatives thereof such as esters, anhydrides and amides. Styrene homopolymers and copolymers are the preferred polymers for use in preparing the compositions according to the presenr invention.

The monovinylidene aromatic polymers to which this invention applies can also advantageously contain an impact-improving component, such as a rubbery polymer, dispersed therein. Such rubbery polymers include conjugated diene polymers such as the various butadiene homo- and co-polymer rubbers, acrylate polymer rubbers, ethylene propylene ("EP") rubbers and ethylene propylene nonconjugated diene monomer ("EPDM") rubbers. Preferably a butadiene-based rubber is dispersed throughout the polymer resin according to the present invention. Such rubber-modified monovinylidene aromatic polymers include rubber-modified polystyrene (high impact polystyrene or "HIPS") or rubber-modified SAN ("ABS").

The aliphatic IR agents suitable for use in the present invention are selected to achieve the optimized combinations of (a) ignition resistance, (b) physical properties and (c) cost in the final product. Suitable IR agents include hexabromo cyclododecane ("HBCD"), pentabromochloro cyclododecane, poly(vinyl chloride) ("PVC"), poly(vinylidene chloride) or chlorinated polyethylene ("CPE"). These materials are typically used with monovinylidene aromatic polymers at levels of 1 to 30 weight parts based on hundred weight parts monovinylidene aromatic polymer more preferably 3 to 15 weight parts, most preferably 5 to 10 weight parts.

The buffering agents of the present invention are typically required when there is a significant concentration of transition metal, such as at least 10 ppm, in the polymer resin. Preferably the buffering agents are used when the transition metal concentration is at least 20 ppm, more preferably when it is at least 50 ppm and most preferably when the transition metal concentration is at least 100 ppm. As used herein the term "transition metal concentration" refers to the amount of transition metal present in the polymer composition and can be calculated from the amount(s) of transition metal compound(s) added to the polymer resin or directly determined by known analysis techniques.

Such relatively high transition metal concentrations can be due to transition metal compound pigments, such as $Fe_2O_3$, or other polymer additives, such as zinc stearate and are typically occurring only when amounts of a transition metal compound pigment or additive are added to the resin, i.e., not from usual polymer polymer production process or production equipment contamination. The amounts and types of transition metal pigments or additives often used in monovinylidene aromatic polymers are well known in this area of technology and include the iron-based pigments, such as $Fe_2O_3$ (red), iron yellow and iron black; zinc-based pigments such ZnS and ZnO; Zn stearate mold release agent; and cadmium-based pigments. Typically these transition metal pigments or additives are used in amounts which produce a transition metal concentration of from 0.01 to 1 weight percent transition metal based on polymer composition weight.

The present invention applies to the use of such transition metal compounds which catalyze or otherwise accelerate the decomposition of the aliphatic halogen-containing IR agent that is employed in these compositions. It has been found that even though traditional stabilizers were sufficient for aliphatio, halogen-containing IR agents with typical transition metal compound impurity levels (less than about 10 ppm or 0.001 weight percent), transition metal compounds at levels of at least 10 ppm will catalyze or otherwise accelerate the IR agent decomposition and result in unacceptable polymer discoloration unless the resin composition is stabilized according to the present invention.

Although TSPP and other buffering compounds have been known for use as acid scavengers while processing chlorinated polymers and while processing styrenic polymers containing chlorinated compounds, see for example DE 36 05 405 (1987), they have not previously been used to stabilize a styrenic polymer containing such levels of a transition metal compound and an aliphatic, halogen-containing IR agent. When recently faced with this problem, it was very surprising to discover such an effective solution in terms of product properties and cost.

The compositions according to the present invention can also contain other additives or components typically used by those skilled in the art. This can include plasticizers or flow promoters such as waxes, mineral oil and the like; antioxidants; U.V. stabilizers; thermal stabilizers (in addition to the buffering compounds); other ignition suppressing or ignition resisting additives; fillers such as glass fibers and glass beads; and the like.

The following experiments are intended to illustrate embodiments of the present invention but do not limit its applicable scope. Unless otherwise specified parts are by weight and temperatures are in degrees Celsius (°C).

A series of ignition-resistant high impact polystyrene ("HIPS") resins are prepared having the components listed in Table I below. These are prepared using standard compounding apparatus and conditions well known to those skilled in the art. The polystyrene was an impact-modified resin containing 6 weight percent of a butadiene-based polymer rubber and 4.5 weight percent mineral oil. This resin is commercially available from Dow Benelux N.V. as STYRON 485. STYRON is a trademark of The Dow Chemical Company. The IR additive level was selected to achieve an ignition resistance rating of V-2 (Underwriters Laboratory Test).

In order to test the thermal stability and resistance to degradation of these resins, injection molded samples were prepared using a Klöckner injection molding apparatus. For each resin composition a sample was injection molded at increasingly higher temperatures until it was determined what maximum temperature could be used to injection mold the resin composition. The maximum temperature was determined to be that molding temperature which resulted in visually detectable polymer discoloration in the molded sample. Unacceptable levels of polymer degradation and discoloration produced black or brown colored streaks or areas in the molded samples.

For each of the resin compositions described Table I below gives the maximum temperature ("Max. Temp." which could be utilized to prepare molded articles. As well known to those skilled in the area of styrenic polymer resin molding, it is very important for a molder to be able to use higher molding temperatures (at least about 220°C) in the molding process in order to fill the molds faster, reduce the molding cycle time and increase production rates while maintaining the good appearance of the articles. Therefore it is very significant that molding temperatures in excess of 220°C can be utilized using the present invention to stabilize such resins containing halogenated aliphatic IR agents and significant levels of transition metal compounds.

The following abbreviations are used in the Tables below and all amounts are in weight parts:

HIPS - high impact (rubber-containing) polystyrene

SAN - poly(styrene acrylonitrile)

CPE - chlorinared polyethylene

HBCD - hexabromocyclododecane
ZnStr - zinc stearate (mold release agent)
BaStr - barium stearate heat stabilizer)
TSPP - tetrasodium pyrophosphate (buffering compound)
$Na_2CO_3$ - sodium carbonate (buffering compound)
TM (ppm)-transition metal content in parts per million polymer resin
BC:TM - weight ratio of buffering compound content per 1 weight part of transition metal
DPDMB - diphenyl dimethyl butane (ignition resistance additive)

Table I -

| Stabilized HIPS Products | | | | | | | |
|---|---|---|---|---|---|---|---|
| Composition | 1* | 2* | 3 | 4 | 5 | 6 | 7 |
| HIPS | 96.5 | 96.4 | 96.3 | 96.25 | 96.2 | 96.1 | 96.1 |
| HBCD | 3.0 | 3.0 | 3.0 | 3.0 | 3.0 | 3.0 | 3.0 |
| BaStr | 0.5 | 0.5 | 0.5 | 0.5 | 0.5 | 0.5 | 0.5 |
| ZnStr | - | 0.1 | 0.1 | 0.1 | 0.1 | 0.1 | 0.1 |
| TSPP | - | - | 0.1 | 0.15 | 0.2 | 0.3 | - |
| $Na_2CO_3$ | - | - | - | - | - | - | 0.3 |
| TM (ppm) | 0 | 104 | 104 | 104 | 104 | 104 | 104 |
| BC:TM | - | - | 9.7 | 14.5 | 19.3 | 29.0 | 29.0 |
| Max.Temp | 220 | 210 | 210 | 220 | 220 | 225 | 225 |

*Comparative example, not an example of the present invention.

It should be noted that with respect to Composition 3 above, while the Max. Temp. value was not increased by the addition of the TSPP buffering compound, the TSPP buffering compound was visually observed to reduce the discoloration effect caused by the zinc-containing transition metal compound additive.

According to the procedure described above for preparing HIPS resins and testing them, samples of ignition resistant monovinylidene aromatic copolymer resins were prepared and similarly tested. The poly-(styrene acrylonitrile) which was used is available from Dow Benelux N.V. as SAN 110 and contains about 29 weight % by weight acrylonitrile. The chlorinated polyethylene is available from The Dow Chemical Company as TYRIN 3623A and contains about 36 weight percent chlorine. TYRIN is a trademark of The Dow Chemical Company. The CPE component also contains a stabilizer package of 4.5 weight percent UV-Chek AM 595 UV stabilizer, an organic/inorganic complex containing Ba, Na and P, which is commercially available from Ferro and 3 weight percent T12, a dibutyl tin dilaurate thermal stabilizer which is commercially available from M&T Chemicals. The wax is AC 316 A, an oxidized PE wax commercially available from Allied Chemical and is added as an internal lubricant.

Table II -

| Stabilized SAN Products | | | |
|---|---|---|---|
| Composition | 8* | 9* | 10 |
| SAN | 89.5 | 89.25 | 88.25 |
| CPE (+ Stab.) | 10 | 10 | 10 |
| ZnStr | - | 0.25 | 0.25 |
| Wax | 0.5 | 0.5 | 0.5 |
| TSPP | - | - | 1 |
| TM (ppm) | 0 | 259 | 259 |
| BC:TM | - | - | 38.7 |
| Max. Temp. | 260 | 240 | 250 |

*Comparative example, not an example of the present invention.

From Tables I and II above it can be seen that the compositions according to the present invention surprisingly permit the production of ignition resistant molded articles from monovinylidene aromatic polymer resin compositions containing an aliphatic halogen-containing ignition resisting agent and a transition metal compound. The molded articles can be prepared using acceptably high molding temperature profiles and do not evidence unacceptable polymer degradation or discoloration under these conditions.

According to the procedure described above for preparing HIPS resins and testing them, further samples of pigmented ignition resistant HIPS resins were prepared and similarly tested as shown below in Table III. The HIPS which was used was a 60/40 blend of STYRON 485, an impact-modified resin containing 6 weight percent of a butadiene-based polymer rubber and 4.5 weight percent mineral oil and STYRON E680, a general purpose polystyrene resin containing no rubber. STYRON 485 and STYRON E680 are commercially available from Dow Benelux N.V. The diphenyl dimethyl butane is a synergistic ignition resistance additive under the Underwriters Laboratory test conditions.

Table III -

| Stabilized, Pigmented HIPS Products | | | |
|---|---|---|---|
| Composition | 11* | 12* | 13 |
| HIPS | bal. | bal. | bal. |
| HBCD | 3 | 3 | 3 |
| BaStr | 0.5 | 0.5 | 0.5 |
| DPDMB | 0.1 | 0.1 | 0.1 |
| $Fe_2O_3$ | - | 0.24 | 0.24 |
| TM (ppm) | 0 | 1679 | 1679 |
| TSPP | - | - | 0.5 |
| BC:TM | - | - | 3 |
| Max. Temp. | 220 | 180 | 220 |

*Comparative example, not an example of the present invention.

From Table III above it can be seen that the compositions according to the present invention surprisingly permit the production of pigmented, ignition resistant molded articles from monovinylidene aromatic polymer resin compositions. The molded articles can be prepared using acceptably high molding temperature profiles and do not evidence unacceptable polymer degradation or discoloration under these conditions.

**Claims**

1. A monovinylidene aromatic polymer molding resin composition comprising at least one monovinylidene aromatic polymer, an aliphatic halogen-containing ignition resisting agent and a transition metal compound additive, characterized in that it is stabilized by the incorporation of an effective amount of a buffering compound.

2. A polymer composition according to Claim 1, wherein the molding resin composition contains at least 10 ppm of the transition metal.

3. A polymer composition according to Claim 1 or Claim 2, wherein the weight ratio of buffering compound to the transition metal is at least 1 weight part buffering compound per weight part of transition metal.

4. A polymer composition according to Claim 1 or Claim 2, wherein the weight ratio of buffering compound to the transition metal compound is at least 1 weight part buffering compound per weight part of transition metal compound.

5. A polymer composition according to any one of the preceding claims, wherein the buffering compound comprises tetrasodium pyrophosphate, sodium carbonate, potassium carbonate, tetrasodium EDTA, sodium oxalate, potassium oxalate, epoxidized soybean oil, sodium phosphate or potassium phosphate.

6. A polymer composition according to Claim 5, wherein the buffering compound comprises at least one of the following: tetrasodium pyrophosphate ("TSPP"), epoxidized soybean oil or sodium carbonate.

7. A polymer composition according to any one of the preceding claims, wherein the transition metal compound is an iron-based pigment, a zinc-based pigment, zinc stearate mold release agent or a cadmium-based pigment.

8. A polymer composition according to any one of the preceding claims, wherein the aliphatic halogen-containing ignition resisting agent comprises hexabromocyclododecane ("HBCD"), pentabromochlorocyclododecane, poly(vinyl chloride), poly(vinylidene chloride) or chlorinated polyethylene ("CPE").

9. A polymer composition according to Claim 8, wherein the halogen-containing ignition resisting ("IR") agent is hexabromocyclododecane ("HBCD") or chlorinated polyethylene ("CPE").

10. A polymer composition according to any one of the preceding claims containing 3 to 15 weight parts aliphatic halogen-containing ignition resistant agent per 100 weight parts of monovinylidene aromatic polymer.

11. A polymer composition according to any one of the preceding claims, wherein the monovinylidene aromatic polymer is polystyrene, rubber-modified polystyrene, SAN or ABS.

12. A polymer composition according to any one of the preceding claims, wherein the resin composition comprises 0.2 to 2 weight parts buffering compound per hundred weight parts polymer composition.

13. A method of stabilizing a molding resin composition comprising at least one monovinylidene aromatic polymer, an aliphatic halogen-containing ignition resisting agent and a transition metal compound which comprises incorporating into said composition an effective amount of a buffering compound to form a stable compound with hydrogen halide degradation product of the composition.

14. A method according to Claim 13, wherein the composition and/or buffering compound is as defined in any one of Claims 2 to 12.

15. Use of a buffering compound to stabilize monovinylidene aromatic polymer molding resin compositions containing an aliphatic halogen-containing ignition resisting agent and a transition metal compound.

16. Use of tetrasodium pyrophosphate, sodium carbonate, potassium carbonate, tetrasodium EDTA, sodium oxalate, potassium oxalate, epoxidized soybean oil, sodium phosphate or potassium phosphate to stabilize monovinylidene aromatic polymer molding resin compositions containing an aliphatic halogen-containing ignition resisting agent and a transition metal compound.

17. An injection molding process for the production of an article from an ignition resistant monovinylidene aromatic polymer resin composition comprising an aliphatic halogenated ignition resisting agent and a transition metal compound characterized in that the composition is stabilized by the addition of an effective amount of a buffering compound.

18. A process according to Claim 17, wherein the composition and/or buffering compound is as defined in any one of Claims 2 to 12.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3729436 (WENDELL O. PHILLIPS)<br>* column 3, lines 20-26; example 1 * | 1-4, 6,<br>9-11, 13 | C08L25/02<br>C08K13/02<br>C08K3/32 |
| X | US-A-4032481 (WALTER O. PILLAR)<br>* claims * | 1-7,<br>10-16 | C08K3/26 |
| A | US-A-3943087 (OTTMAR LEUCHS)<br>* column 2, line 30 - column 3, line 7 *<br>* column 6, lines 34 - 36; claims * | 1 | |
| A | GB-A-1205647 (THE GOODYEAR TIRE & RUBBER COMPANY)<br>* claims * | 1 | |
| A | CHEMICAL ABSTRACTS, vol. 91, no. 18, 29 October 1979<br>Columbus, Ohio, USA<br>page 43; ref. no. 141849Z<br>* abstract *<br>& JP-A-79 063 164 (ASAHI-DOW LTD.) 21-05 1979 | 1 | |

TECHNICAL FIELDS
SEARCHED (Int. Cl.5 )

C08K
C08L

The present search report has been drawn up for all claims

| Place of search | Date of completion of the search | Examiner |
|---|---|---|
| THE HAGUE | 24 OCTOBER 1990 | DE LOS ARCOS Y E. |

EPO FORM 1503 03.82 (P0401)